# EUROPÄISCHE PATENTANMELDUNG

(11) **EP 1 825 749 A1**
(43) Veröffentlichungstag der Anmeldung: **29.08.2007**
(21) Anmeldenummer: 07003283.4
(22) Anmeldetag: 16.02.2007
(51) Int. Cl.: A01M 7/00

(54) **Landwirtschaftliche Feldspritze**

(30) Priorität: 24.02.2006 DE 102006008612
(71) Anmelder: Amazonen-Werke H. Dreyer GmbH & Co. KG, 49205 Hasbergen (DE)
(72) Erfinder: Ehlen, Volker, 49205 Hasbergen (DE); Oberheide, Friedrich, 49143 Bissendorf (DE)

(57) **Zusammenfassung**

Landwirtschaftliche Feldspritze zum Ausbringen von Flüssigkeiten mit einem Flüssigkeitstank (1), zumindest einer Pumpe (2), einer einstellbaren Dosierarmatur (3) und zumindest einer von der Dosierarmatur abgehenden Ausbringleitung (5), an der mehrere Ausbringdüsen (8), denen jeweils ein Abschaltventil (9) zugeordnet ist, angeschlossen sind, wobei die Abschaltventile der Ausbringdüsen einzeln und/oder gruppenweise über eine Betätigungseinrichtung (10) schaltbar sind, wobei in der Ausbringleitung zwischen Dosierarmatur und Ausbringdüsen zumindest ein Durchflussmesser (11) angeordnet ist. Um Maßnahmen vorzuschlagen um sicher feststellen zu können, welche Ausbringmenge tatsächlich ausgebracht ist, wenn an dem Ende der Ausbringleitungen eine in den Vorratstank mündende Rücklaufleitung (6,7) angeschlossen ist, um Ablagerungen in den Ausbringleitungen zu vermeiden, ist vorgesehen, dass an dem der Dosierarmatur abgewandten Ende jeder mit Düsen besetzten Ausbringleitung eine in den Flüssigkeitstank mündende Rücklaufleitung, der ein Drosselventilelement (13) zugeordnet ist, angeschlossen ist, dass den Rücklaufleitungen vor der Einmündung in den Flüssigkeitstank zumindest ein weiterer Durchflussmesser (16) zugeordnet ist.

## Beschreibung

Die Erfindung betrifft eine landwirtschaftliche Feldspritze gemäß des Oberbegriffes des Patentanspruches 1.

Eine derartige Feldspritze ist durch die EP 14 35 200 A1 bekannt. Bei dieser Feldspritze ist in der Ausbringleitung zwischen Dosierarmatur und Ausbringdüsen ein Durchflussmesser angeordnet. Mit diesem Durchflussmesser ist die tatsächlich ausgebrachte Ausbringmenge zu ermitteln.

Das Problem bei derartigen Feldspritzen besteht insbesondere bei dem Ausbringen von kleinen Flüssigkeitsmengen darin, dass aufgrund der niedrigen Fließgeschwindigkeiten insbesondere an dem Ende der jeweiligen Ausbringleitung sich Ablagerungen in den Ausbringleitungen bilden können.

Um diesem Problem abzuhelfen, hat man beispielsweise bei der Feldspritze nach der DE 34 01 734, an dem der Dosierarmatur abgewandten Ende jeder mit Düsen besetzten Ausbringleitung eine in dem Flüssigkeitstank mündende Rücklaufleitung, der ein Drosselventil zugeordnet ist, angeschlossen. Das Drosselventil simuliert einen weiteren Verbraucher in der Ausbringleitung, so dass sich in dem Bereich der Ausbringleitung, in dem die Düsen angeordnet sind, eine höhere Durchflussgeschwindigkeit ergibt. Hierdurch wird verhindert, dass sich in der Ausbringleitung Ablagerungen bilden, da eine ausreichend hohe Fließgeschwindigkeit in den Ausbringleitungen sichergestellt ist, weil ein Teil der in den Ausbringleitungen eingeleiteten Flüssigkeit, die über den von den Ausbringdüsen ausbringbaren Ausbringmenge liegt, über die Rücklaufleitung und das Drosselventil in den Tank zurückfließt. Insbesondere, wenn die Drosselventile einstellbar ausbildet sind, ist nicht bekannt, welche Menge über die Rücklaufleitung in den Tank, tatsächlich zurückfließt, so dass nicht festgestellt werden kann, wieviel Flüssigkeit tatsächlich über die Düsen ausgebracht wird.

Der Erfindung liegt die Aufgabe zugrunde, Maßnahmen vorzuschlagen, um sicher feststellen zu können, welche Ausbringmenge tatsächlich ausgebracht ist, wenn an dem Ende der Ausbringleitungen eine in den Vorratstank mündende Rücklaufleitung angeschlossen ist, um Ablagerungen in den Ausbringleitungen zu vermeiden.

Diese Aufgabe wird erfindungsgemäß durch die Merkmale des Patentanspruches 1 gelöst. Infolge dieser Maßnahmen wird durch die zusätzlich an dem Ende der Ausbringleitungen angeschlossenen Rücklaufleitung, der in bevorzugter Weise ein Drosselventil zugeordnet ist, sichergestellt, dass eine ausreichende Fließgeschwindigkeit in den Ausbringleitungen herrscht, damit sich keine Ablagerungen in der jeweiligen Ausbringleitung bilden können. Durch den in der Rücklaufleitung angeordneten Durchflussmesser lässt sich die über die Rücklaufleitung oder den Rücklaufleitungen in den Vorratsbehälter zurückfließende Flüssigkeitsmenge ermitteln. durch eine entsprechende Differenzbildung zwischen den von dem Durchflussmesser, der zwischen der Dosierarmatur und den Ausbringdüsen der Ausbringleitung angeordnet ist, und dem der oder den Rücklaufleitungen zugeordneten Durchflussmesser oder -messern lässt sich die tatsächliche Ausbringmenge, die über die Ausbringdüsen ausgebracht wird in einfacher Weise ermitteln.

Weitere Einzelheiten der Erfindung sind der Beispielsbeschreibung und der Zeichnung zu entnehmen. Hierbei zeigen
- Fig. 1: den Funktionsplan einer erfindungsgemäßen Feldspritze in Prinzipdarstellung und
- Fig. 2: den Funktionsplan einer weiteren erfinderischen Feldspritze in Prinzipdarstellung,

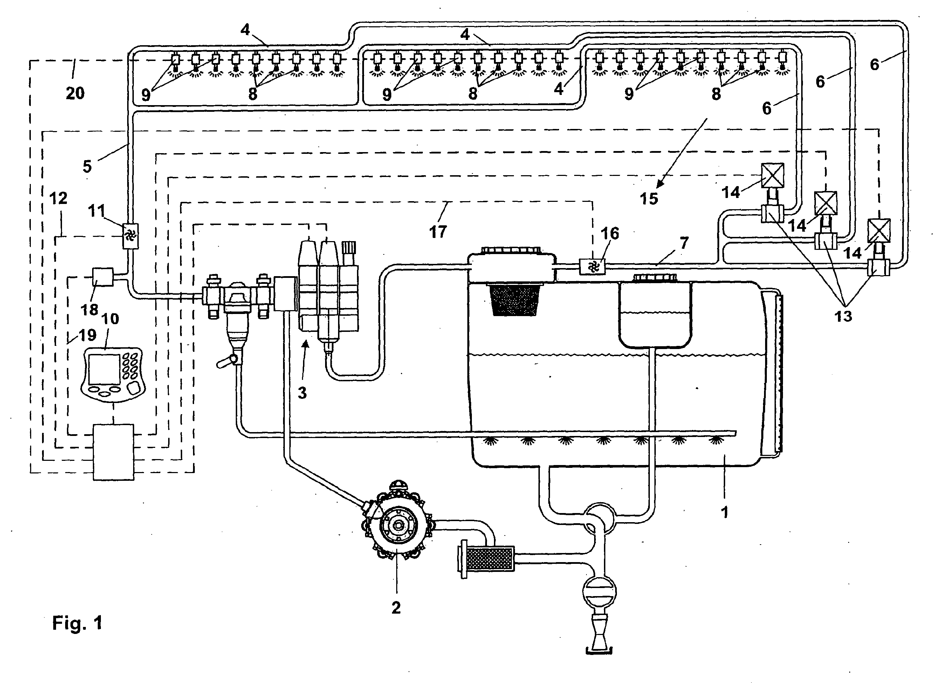

Die Feldspritze weist u. a. einen Flüssigkeitstank 1, ein motorisch angetriebene Pumpe 2, eine ein Druckregelventil ausweisende Dosierarmatur 3, welche über einen Stellmotor einstellbar ist, die zu den einzelnen Spritzleitungen 4 der Teilbreitenbereiche führende Druckleitung 5 und die an den einzelnen Spritzenleitungen 4 der Teilbreitenbereiche angeschlossenen Rücklaufleitungen 6, die zu einer in den Tank 1 mündenden Leitung 7 zusammengefasst werden, auf. An den Spritzleitungen 4 der Teilbreitenbereiche sind die Spritzdüsen 8 angeordnet. Den einzelnen Spritzdüsen 8 sind jeweils einzelne Abschaltventile 9 zugeordnet, die einzeln oder gruppenweise von eine als Bordcomputer 10 ausgebildete Betätigungseinrichtung zu schalten sind. Zwischen der Dosierarmatur 3 und den Spritzbringdüsen 8 ist in der Druckleitung 5 ein Durchflussmesser 11 angeordnet, welcher über eine Signalleitung 12 mit dem Bordcomputer 10 verbunden ist. Die einzelnen Rücklaufleitungen 6 münden über die Leitung 7 in den Flüssigkeitstank 1, wobei die einzelnen Rücklaufleitungen 6, wie in Fig. 1 gezeigt ist, zu einer gemeinsamen in den Flüssigkeitstank 1 mündenden Leitung 7 zusammengefasst sein können. Den einzelnen Rücklaufleitungen 6 ist jeweils ein motorisch betätigbares Drossel- oder Abschaltventil 13 zugeordnet. Diese Ventile 13 bzw. die motorischen Elemente 14 der Ventile 13 sind über Signalleitungen 15 mit dem Bordcomputer 10 verbunden. Bevor die Rücklaufleitungen 6 bzw. die Leitung 7 in den Flüssigkeitstank 1 einmündet, ist in der Leitung 7 ein Durchlaufmesser 16 angeordnet, der über eine Signalleitung 17 mit dem Bordcomputer 10 verbunden ist. In der Druckleitung 5, die zu den Spritzleitungen 4 führt, ist noch ein Drucksensor 18, der ebenfalls über eine Signalleitung 19 mit dem Bordcomputer 10 verbunden ist..

### Die Funktionsweise ist folgende:

Wenn während des Betriebes der Feldspritze durch die Abschaltventile 9 die Ausbringdüsen 8 geschlossen sind und somit kein Spritzmittel ausgebracht wird, strömt das Spritzmittel durch die Spritzleitungen 4, an denen die Düsen 8 angebracht sind, über die Rücklaufleitungen 6, 7 in den Flüssigkeitstank 1 zurück. Hierdurch wird verhindert, dass sich in den Spritzleitungen 4 Ablagerungen bilden. Auch während des Betriebes, wenn über die Abschaltventile 9, wenn sie in Durchflussposition geschaltet sind, und über die Spritzdüsen 8 das Spritzmittel ausgebracht wird, wird über die in den Rücklaufleitungen 6 angeordneten Ventile 13 sichergestellt, dass eine kleine Spritzmittelmenge über die Rücklaufleitungen 6 in den Flüssigkeitstank 1 zurückfließt. Hierdurch wird gewährleitstet, dass auch noch an den Enden der Spritzleitungen 4 im Bereich der letzten Düse 8 einer Teilbreite eine ausreichend hohe Fließgeschwindigkeit des Spritzmittels innerhalb der Spritzleitungen 4 gegeben ist, damit sich keine Ablagerungen in den Spritzleitungen 4 bilden können. Über den ersten Durchflussmesser 11 wird die Spritzmittelmenge ermittelt, die über die Druckleitung 5 den Spritzleitungen 4 und den Spritzdüsen zugeführt wird, während über den zweiten Durchflussmesser 16 die Menge ermittelt wird, welche über die Rücklaufleitungen 6 in den Tank zurückfließt. Durch Differenzbildung der von beiden den Durchflussmessern 11 und 16 ermittelten Durchflusswerte lässt sich die tatsächliche Ausbringmenge an Spritzmittel durch das in dem Bordcomputer 10 hinterlegte Programm ermitteln. Wenn zur Reduzierung der Arbeitsbreite über die den Düsen 8 zugeordneten Abschaltventile 9 die Spritzmittelzufuhr zu diesen Düsen 8 unterbrochen wird, in dem entsprechende Steuersignale von dem Bordcomputer 10 an die Abschaltventile 9 übermittelt werden, wird entweder über die Dosierarmatur 3 eine geringere Spritzmittelmenge der Druckleitung 5 und den Spritzleitung 4 zugeführt oder die den Rücklaufleitungen 6 zugeordneten Ventile 13 werden entsprechend weiter geöffnet, damit der Systemdruck in den Spritzmittelleitungen 4 in den vorgegebenen Tolleranzbereich eingehalten wird und somit die vorgesehene Spritzmittelmenge pro Düse 8 ausgebracht werden kann. Hierzu werden über den Bordcomputer 10 sowohl die Dosierarmatur 3 wie auch die in den Rücklaufleitungen 6 angeordneten Ventile 13 entsprechend angesteuert. Auch die den Spritzdüsen 8 zugeordneten Abschaltventile 9 werden von dem Bordcomputer 10 entsprechend angesteuert.

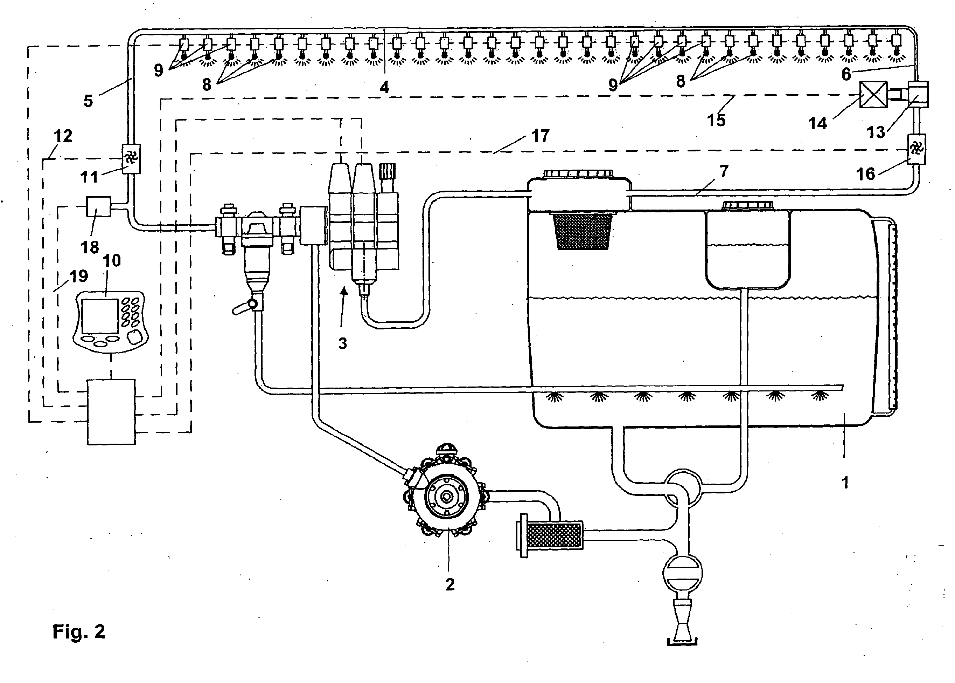

Das Ausführungsbeispiel gemäß Fig. 2 unterscheidet sich von dem Ausführungsbeispiel gemäß Fig. 1 im Wesentlichen dadurch, dass die Spritzmittelleitung 4 einteilig und nicht in Teilbreiten unterteilt ausgebildet ist. Die den einzelnen Spritzdüsen 8 zugeordneten Abschaltventile 9, die zwischen den Spritzdüsen 8 und der Spritzmittelleitung 4 angeordnet sind, werden von dem Bordcomputer 10 entsprechend angesteuert um die Spritzmittelzufuhr zu den einzelnen Spritzdüsen 8 jeweils zuzuschalten oder abzuschalten. In der Rücklaufleitung 6 zwischen der letzten Spritzdüse 8 der Spritzleitung 4 und der Einmündung der Rücklaufleitung 6 in den Flüssigkeitstank 1 ist ein Durchflussmesser 16 angeordnet. Dieser Rücklaufleitung 6 ist ebenfalls ein Drossel- oder Abschaltventil 13, welches motorisch betätigbar ist, zugeordnet. Das Ventil 13 ist über die Signalleitung 15 mit dem Bordcomputer 10 verbunden. Ebenfalls ist in der zu der Spritzmittelleitung 4 führenden Druckleitung 5 ein Durchflussmesser 11 angeordnet, der mit dem Bordcomputer verbunden ist.

Durch die entsprechende Differenzbildung der von den beiden Durchflussmessern 11 und 16 gemessenen Durchflusswerte lässt sich die tatsächliche Ausbringmenge ermitteln. Weiterhin unterscheidet sich die Spritzmittelleitung 4 im Bereich der Spritzdüsen 8 durch ihre teilbreitenähnlichen unterschiedlichen Querschnitte. Am Anfang weist die Spritzmittelleitung 4 einen größeren Durchmesser als im hinteren Bereich auf, um so die Größe der Spritzmittelleitung 4 an die tatsächlich noch vorhandenen Durchflussmengen in der Leitung 4 anzupassen, damit auch am Ende der Spritzmittelleitung 4 noch eine relativ hohe Fließgeschwindigkeit bei relativ geringem zurückfließendem Spritzmittelvolumen in den Flüssigkeitstank 1 über die Rücklaufleitung 6 gewährleistet ist. Durch den Bordcomputer 10 können die einzelnen Abschaltventile 9, die den einzelnen Spritzdüsen 8 zugeordnet sind einzeln oder gruppenweise über die Signalleitungen 20 angesteuert werden, so dass die Arbeitsbreite in kleineren oder größeren Schritten zu vergrößern oder zu reduzieren ist.

## Patentansprüche

1. Landwirtschaftliche Feldspritze zum Ausbringen von Flüssigkeiten mit einem Flüssigkeitstank, zumindest einer Pumpe, einer einstellbaren Dosierarmatur und zumindest einer von der Dosierarmatur abgehenden Ausbringleitung, an der mehrere Ausbringdüsen, denen jeweils ein Abschaltventil zugeordnet ist, angeschlossen sind, wobei die Abschaltventile der Ausbringdüsen einzeln und/oder gruppenweise über eine Betätigungseinrichtung schaltbar sind, wobei in der Ausbringleitung (5) zwischen Dosierarmatur (3) und Ausbringdüsen (8) zumindest ein Durchflussmesser (11) angeordnet ist, **dadurch gekennzeichnet, dass** an dem der Dosierarmatur (3) abgewandten Ende jeder mit Düsen (8) besetzten Ausbringleitung (4) eine in den Flüssigkeitstank (1) mündende Rücklaufleitung (6,7), der ein Drosselventilelement (13) zugeordnet ist, angeschlossen ist, dass den Rücklaufleitungen (6,7) vor der Einmündung in den Flüssigkeitstank (1) zumindest ein weiterer Durchflussmesser (16) zugeordnet ist.
